# EUROPÄISCHE PATENTSCHRIFT

(11) **EP 1 048 996 B1**
(45) Veröffentlichungstag und Bekanntmachung des Hinweises auf die Patenterteilung: **09.10.2002**
(21) Anmeldenummer: 00108688.3
(22) Anmeldetag: 20.04.2000
(51) Int. Cl.: G05D 22/02, D06F 58/28

(54) **Verfahren zum Schätzen der Beladung und der Trocknungsdauer in Haushaltwäschetrocknern vor Ablauf des Trocknungsvorgangs**
Method for estimating load and drying duration in household laundry driers before the drying process run
Méthode d'évaluation de la charge et de la durée du séchage pour sèche-linge domestique avant le déroulement du processus de séchage

(30) Priorität: 26.04.1999 DE 19918877
(43) Veröffentlichungstag der Anmeldung: 02.11.2000
(73) Patentinhaber: BSH Bosch und Siemens Hausgeräte GmbH, 81669 München (DE)
(72) Erfinder: Nehring, Ulrich, 10719 Berlin (DE); Lahrmann, Andreas, 14193 Berlin (DE)

(56) Entgegenhaltungen:
- DE-A- 4 432 055
- DE-A- 4 447 270
- DE-A- 19 611 324

## Beschreibung

Die Erfindung betrifft ein Verfahren zum Schätzen der Beladung und/oder der Trocknungsdauer vor Ablauf des Trocknungsvorgangs in einem Haushaltwäschetrockner, in dem die Wäsche zur Trocknung mit einem Luftstrom in Berührung gebracht und bei dem eine von der Wäschefeuchte abhängige Größe und ein Maß für die Temperatur eines Luftstroms zur Trocknung der Wäsche vor und/oder nach dessen Berührung mit der Wäsche ermittelt wird, und die von der Wäschefeuchte abhängige Größe in Verbindung mit dem Maß für die Temperatur des Luftstroms vor und/oder nach dessen Berührung mit der Wäsche zur Schätzung der Beladung und/oder der Trocknungsdauer verwendet wird.

Bei Haushaltwäschetrocknern beziehungsweise Haushaltwaschtrocknern wird heutzutage in nahezu allen Fällen die Wäschefeuchte beziehungsweise eine davon abhängige Größe gemessen und der Trocknungsvorgang beendet, sobald die Wäsche die von der Bedienperson gewünschte Restfeuchte erreicht hat. Die dafür benötigte Trocknungsdauer hängt dabei von vielen Faktoren ab, beispielsweise von der Art der zu trocknenden Wäsche, deren Anfangsfeuchte, der Temperatur und dem Verlauf des Luftstroms, und kann deshalb sehr verschieden sein. Eine Vorhersage der Trocknungsdauer ist aus diesem Grund auch insbesondere zu Beginn des Trocknungsvorgangs sehr schwierig. Für die Bedienperson entsteht daraus der Nachteil, daß sie den Trocknungsvorgang startet und nicht weiß, wann er beendet sein wird, so daß sie in ihrer Zeiteinteilung behindert ist. Zusätzlich ist eine Vorhersage der Trocknungsdauer beziehungsweise der Restzeit gerade zu Beginn des Trocknungsvorgangs, zu dem diese Angabe für die Bedienperson am hilfreichsten wäre, besonders schwierig. Andererseits sollte nach Ende des Trocknungsvorgangs die Wäsche im Haushaltwäschetrockner auch nicht längere Zeit liegengelassen werden, da in diesem Fall die Gefahr der Knitterbildung besteht. Die Kenntnis der Trocknungsdauer ist daher von großem Nutzen.

Eine weitere für den Trocknungsvorgang wesentliche Größe ist die Beladung, die beispielsweise erheblichen Einfluß auf die Geschwindigkeit hat, mit der ein Wäscheposten getrocknet werden kann. Weiterhin beeinflußt die Beladung auch das Ergebnis des Trocknungsvorgangs, so daß die Kenntnis der Beladung vorteilhaft für die Steuerung des Haushaltwäschetrockners verwendet werden kann. Diese Größe ist aber ebenso wie die Trocknungsdauer nur sehr schlecht bestimmbar.

Die eingangs bezeichnete Erfindung geht von der DE 196 11 324 A1 als Stand der Technik aus. Daraus ist bekannt, aufgrund der in einer Messphase erfassten Parameter die Trockenzeit zu berechnen. Dazu wird die Änderung der Wäscheleitfähigkeit oder die Kontakthäufigkeit der Wäsche mit den Abtastelektroden für die Feuchte in der Wäsche oder die Temperatur bzw. die Temperaturänderung der Abluft oder die Temperaturdifferenz zwischen Trommeleintritts- und Trommelaustrittstemperatur oder eine Kombination mehrer dieser Parameter bestimmt. Hiermit kann nur im Verlaufe eines Trockenprozesses ein einmal vorgegebener Wert für die Dauer des Trockenprozesses durch einen anderen Wert ersetzt werden, der den Tatsachen wohl etwas näher kommt; jedoch liegt weder zu Beginn des Trockenprozesses bereits ein dem sich später als richtig erweisenden Wert genügend naher Wert für die zu erwartende Trocknungsdauer vor noch kann dieser Wert im Laufe des Prozesses frühere Erfahrungen über das Verhalten des Parameters in Abhängigkeit zu irgend einem anderen Umstand bei gleichartigen Trockenprozessen berücksichtigen.

Diese Aufgabe kann auch das aus DE 44 32 055 A1 bekannte Verfahren zur Ermittlung der Dauer eines Trockenvorganges nicht in wünschenswerter Weise lösen. Dort kann zwar ein vorher gespeicherter Wert für die zu erwartende Dauer eines Trockenvorganges durch einen neu errechneten Wert ersetzt werden. Jedoch berücksichtigt auch dieser neu errechnete Wert keinesfalls irgend welche anderen Umstände als die Veränderung der vorher bestimmten, zu beobachtenden Parameter.

Der vorliegenden Erfindung liegt die Aufgabe zugrunde, ein Verfahren zum Schätzen der Beladung und/oder der Trocknungsdauer zu schaffen, mit dem bereits vor Ablauf des Trocknungsvorgangs und insbesondere bereits kurz nach dessen Beginn zuverlässige Aussagen zur Beladung und/oder der Trocknungsdauer gewonnen werden können.

Erfindungsgemäß wird diese Aufgabe dadurch gelöst, dass die Beladung und/oder die Trocknungsdauer mittels eines neuronalen Netzes geschätzt wird, dass als von der Wäschefeuchte abhängige Größe ein Maß für den elektrischen Widerstand der Wäsche ermittelt wird und dass am Ende eines Trocknungsvorgangs die tatsächliche Trocknungsdauer und anhand dieser der Schätzfehler für die vor Ablauf dieses Trocknungsvorgangs geschätzte Trocknungsdauer ermittelt und bei zukünftigen Schätzungen der Trocknungsdauer berücksichtigt wird. Das Schätzverfahren kann während des Trocknungsvorgangs wiederholt werden, um der Bedienperson ständig eine aktuelle Schätzung anzeigen zu können.

Die erfindungsgemäße Lösung beruht auf der überraschenden Erkenntnis, daß bereits aus diesen Eingangsgrößen die Trocknungsdauer und die Beladung insbesondere auch schon kurz nach Beginn des Trocknungsvorgangs bestimmbar sind. In besonders hilfreicher Weise wird die Beladung und/oder die Trocknungsdauer mittels eines neuronalen Netzes geschätzt. Insbesondere kann ein mit Hilfe von Trainingsdaten trainiertes neuronales Netz verwendet werden. Neuronale Netze bieten allgemein den Vorteil, daß bei ihnen der Zusammenhang der Eingangsgrößen mit den Ausgangsgrößen wie in diesem Fall der geschätzten Trocknungsdauer oder Beladung nicht genau bekannt sein muß. Im Gegenteil ist es ausreichend, wenn Erfahrungswerte in Form von Trainingsdaten vorliegen. Es wird vorteilhafterweise ein neuronales Netz verwendet, bei dem bereits eine geringe Anzahl von Trainingsdaten ausreicht und/oder mit dem Eingangsgrößen beliebig auf wenigstens eine Ausgangsgröße abgebildet werden können.

Zur Durchführung dieses Verfahrens ist vorteilhafterweise nur die Messung einer von der Wäschefeuchte abhängigen Größe und der Temperatur an einem oder zwei Orten erforderlich. Da die Wäschefeuchte oder eine davon abhängige Größe zur feuchteabhängigen Beendigung des Trocknungsvorgangs ohnehin gemessen wird, liegt diese Information bereits vor und erfordert keinen zusätzlichen Aufwand. Die Temperatur ist eine Größe, die mit sehr einfachen und kostengünstigen Mitteln gemessen werden kann, wobei auch die Messung der Luftstromtemperatur zumindest an einem Punkt in der Regel ohnehin zur Regelung von Heizeinrichtungen im Haushaltwäschetrockner durchgeführt wird. Die Eingangsgrößen können daher mit sehr geringem Aufwand gewonnen werden.

Bei Ablufttrocknern, bei denen die zur Trocknung der Wäsche verwendete Luft ständig von außen angesaugt wird, ist es vorteilhaft, zusätzlich die Umgebungslufttemperatur zu messen und in die Schätzung einzubeziehen. Diese Temperatur kann durch einen Fühler im Kanal zum Ansaugen der Umgebungsluft oder auch durch eine Temperaturmessung an einer beliebigen Stelle im Luftkanal vor Beginn des Trocknungsvorgangs und vor Inbetriebnahme der Heizeinrichtung gemessen werden.

Weiterhin kann zur Schätzung der Beladung und/oder der Trocknungsdauer zusätzlich die seit Beginn des Trocknungsvorgangs vergangene Zeit verwendet werden. Auf diese Weise kann bei wiederholter Schätzung während des Trockungsvorgangs die Schätzung aufgrund der zusätzlichen Eingangsgröße verbessert werden.

Als von der Wäschefeuchte abhängige Größe wird ein Maß für den elektrischen Widerstand der Wäsche ermittelt. Diese Messung läßt sich einfach mittels Elektroden in Kontakt mit der Wäsche und einer heutzutage üblichen elektrischen oder elektronischen Steuerung durchführen.

Für die Auswertung der Eingangsgrößen zur Ermittlung der Schätzwerte wird aufgrund der komplexen Beziehung zwischen den Eingangsgrößen und den richtigen Schätzwerten vorteilhafterweise ein Verfahren eingesetzt, das zuvor unter Auswertung einer Reihe von Testdaten entworfen wurde. Dazu können zuvor in einer Testreihe von Trocknungsvorgängen sowohl die Eingangsgrößen als auch die Trocknungsdauer und die Beladung ermittelt werden und zum Entwurf des Schätzverfahrens herangezogen werden, so daß später im Betrieb bei Auftreten sowohl einer beim Entwurf bereits berücksichtigten Kombination der Eingangsgrößen als auch einer davon verschiedenen der richtige oder zumindest ein an den richtigen sehr nahe kommender Wert für die Beladung und/oder die Trocknungsdauer geschätzt werden kann.

Als besonders einfache Möglichkeit kann anhand der vorher aufgenommenen Testdaten eine Look-up-Tabelle erstellt werden, in der zu einer Vielzahl verschiedener Kombinationen der Eingangsgrößen die ermittelten, zugehörigen Werte für die Beladung und/oder die Trocknungsdauer gespeichert sind, wobei die Schätzwerte für Zwischenwerte der Eingangsgrößenkombinationen durch Inter- oder Extrapolation von benachbarten Werten aus der Tabelle ermittelt werden können.

Am Ende eines Trocknungsvorgangs wird die tatsächliche Trocknungsdauer und anhand dieser der Schätzfehler für die vor Ablauf dieses Trocknungsvorgangs geschätzte Trocknungsdauer ermittelt und bei zukünftigen Schätzungen der Trocknungsdauer berücksichtigt. Auf diese Weise lernt die verfahrensgemäße Steuerung im Betrieb laufend weiter und ist so in der Lage, Veränderungen der für den Trocknungsvorgang wesentlichen Einflüsse zu berücksichtigen und zu kompensieren. Diese Einflüsse können beispielsweise eine Veränderung der Heizleistung durch Alterung oder durch Verlegen eines Luftkanals oder die Veränderung der Umgebungsbedingungen wie beispielsweise der Umgebungstemperatur oder der Luftfeuchtigkeit sein. Letztere unterliegen bereits wegen der Wetterbedingungen und der Jahreszeiten Schwankungen.

Der ermittelte Schätzfehler kann auch verwendet werden, um bereits kurzfristig den Schätzwert zu korrigieren. Dazu kann der Schätzfehler des letzten Trocknungsvorgangs oder der gemittelte Schätzfehler mehrerer vorangegangener Trocknungsvorgänge verwendet werden. Falls beispielsweise bei den vorangegangenen Schätzungen ein systematischer Fehler gemacht wurde und sich nachträglich herausgestellt hat, daß der Schätzwert ständig zu niedrig war, kann bei zukünftigen Schätzungen der vorher gemachte Schätzfehler bereits vorsorglich addiert werden, um die Schätzung zu verbessern. Diese Korrektur des Schätzwerts empfiehlt sich insbesondere, wenn der Fehler systematisch ist und zumindest für einige Trocknungsvorgänge ähnlich bleibt. Tritt bei jedem Trocknungsvorgang ein völlig anderer, zufälliger Fehler auf, kann es vorteilhafter sein, diese Art der Korrektur der Schätzungen zu unterlassen. Aber auch dies kann die erfindungsgemäß arbeitende Steuerung erkennen.

Bevorzugterweise wird ein neuronales Netz vom Typ Multi Adaline verwendet. Bei einem derartigen neuronalen Netz sind zum weiteren Training vorteilhafterweise nur wenig Trainingsdatensätze erforderlich. In O. Nelles, LOLIMOT - Lokale, lineare Modelle zur Identifikation nichtlinearer, dynamischer Systeme, in: Automatisierungstechnik, Bd. 45 (1997), S. 163-174, R. Oldenbourg Verlag, 1997 ist ein derartiges neuronales Netz beschrieben.

Die im Betrieb am Ende eines Trocknungsvorgangs tatsächlich gemessene Trocknungsdauer kann bei einem neuronalen Netz auch besonders einfach zur Verbesserung zukünftiger Schätzungen verwendet werden, da zuvor zum Trainieren mittels Trainingsdaten ohnehin Trainingsregeln angewendet wurden, mit denen in gleicher oder ähnlicher Form die später im Betrieb ermittelten Werte berücksichtigt werden können. Diese Werte können sozusagen als zusätzliche Trainingsdaten verwendet werden.

Die Beladung und/oder die Trocknungsdauer kann jedoch auch mittels Fuzzylogik geschätzt werden. Dieses Verfahren besitzt den Vorteil, einen nur geringen Rechenaufwand zu erfordern. Als Eingangsgrößen können für sämtliche Verfahren Werte verwendet werden, die von den Werten für die Wäschefeuchte und die Temperatur des Luftstroms vor und/oder nach dessen Berührung mit der Wäsche abgeleitet sind beziehungsweise aus diesen berechnet wurden. Dies kann beispielsweise die Anstiegsgeschwindigkeit, eine Ableitung nach der Zeit, der Kehrwert oder der Mittelwert sein. Solche von der Wäschefeuchte und der Temperatur des Luftstroms abgeleiteten Größen können als zusätzliche Eingangsgrößen für die Schätzung verwendet werden oder anstelle der Werte, aus denen sie berechnet wurden.

Die Beladung und/oder die Trocknungsdauer kann jedoch auch mittels Fuzzylogik geschätzt werden. Dieses Verfahren besitzt den Vorteil, einen nur geringen Rechenaufwand zu erfordern.

Als Eingangsgrößen können für sämtliche Verfahren Werte verwendet werden, die von den Werten für die Wäschefeuchte und die Temperatur des Luftstroms vor und/oder nach dessen Berührung mit der Wäsche abgeleitet sind beziehungsweise aus diesen berechnet wurden. Dies kann beispielsweise die Anstiegsgeschwindigkeit, eine Ableitung nach der Zeit, der Kehrwert oder der Mittelwert sein. Solche von der Wäschefeuchte und der Temperatur des Luftstroms abgeleiteten Größen können als zusätzliche Eingangsgrößen für die Schätzung verwendet werden oder anstelle der Werte, aus denen sie berechnet wurden.

Da der Zusammenhang zwischen den Eingangsgrößen und den zu schätzenden Werten sehr komplex ist, können zur Schätzung mittels Fuzzylogik Regeln verwendet werden, die durch Lernen mittels eines neuronalen Netzwerks aus Trainingsdaten gewonnen wurden. Damit läßt sich der Vorteil der Lernfähigkeit von neuronalen Netzen mit dem des geringen Rechenaufwands bei der Fuzzylogik verbinden.

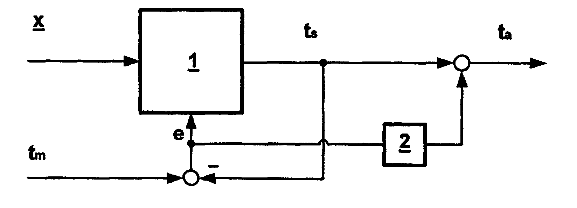

Weitere Einzelheiten, Merkmale und Vorteile der Erfindung ergeben sich aus der folgenden Beschreibung eines Ausführungsbeispiels unter Bezugnahme auf die Zeichnung.

Darin zeigt die einzige Figur den Signalflußplan für die Auswertung nach dem erfindungsgemäßen Verfahren.

In der Zeichnung sind mit x die Eingangsgrößen beziehungsweise der Eingangsgrößenvektor bezeichnet. Die Eingangsgrößen sind die Wäschespannung, daß heißt der Spannungsabfall an der Wäsche bei der Messung des elektrischen Wäschewiderstands, und der Kehrwert der Anstiegsgeschwindigkeit der Temperatur des Luftstroms nach dessen Berührung mit der Wäsche. Diese Eingangsgrößen x werden bereits kurz nach Beginn des Trocknungsvorgangs bestimmt und an ein neuronales Netz 1 gegeben, das aus ihnen einen Schätzwert tₛ für die Trocknungsdauer bestimmt.

Zusätzlich wird nach jedem Trocknungsvorgang die tatsächliche Trocknungsdauer tₘ gemessen. Von diesem gemessenen Wert tₘ wird der für diesen Trocknungsvorgang geschätzte Wert tₛ subtrahiert, um den Schätzfehler e zu bestimmen. Dieser Schätzfehler e wird dem neuronalen Netz 1 zugeführt, das sich daraufhin selbst so organisiert, daß bei zukünftigen Schätzungen der Schätzfehler e geringer wird beziehungsweise, daß die zukünftigen Schätzungen besser werden. Diese Fehlerrückführung kann durch das Backpropagation-Verfahren erreicht werden.

Um kurzfristig eine Korrektur der geschätzten Trocknungsdauer tₛ zu erreichen, wird der Schätzfehler e zusätzlich an ein nichtrekursives digitales Filter 2 weitergegeben, das den Schätzfehlerverlauf glättet, indem es beispielsweise immer aus einer bestimmten Anzahl vorangegangener Werte den Mittelwert bildet, wobei die vorangegangenen Werte der Schätzfehler auch unterschiedlich gewichtet werden können. Das Ausgangssignal des digitalen Filters 2 wird zu der geschätzten Trocknungsdauer tₛ addiert, um anhand des zuletzt gemachten Schätzfehlers e die aktuelle Schätzung der Trocknungsdauer zu verbessern. Die Summe tₐ aus dem Ausgangssignal des digitalen Filters und dem Schätzwert tₛ schließlich wird angezeigt, so daß der Bedienperson bereits kurz nach Beginn des Trocknungsvorgangs ein zuverlässiger Wert für die zu erwartende Trocknungsdauer mitgeteilt werden kann.

## Patentansprüche

1. Verfahren zum Schätzen der Beladung und/oder der Trocknungsdauer (t) bei einem Haushaltwäschetrockner vor Ablauf des Trocknungsvorgangs, bei dem eine von der Wäschefeuchte abhängige Größe und ein Maß für die Temperatur eines Luftstroms zur Trocknung der Wäsche vor und/oder nach dessen Berührung mit der Wäsche ermittelt wird, und die von der Wäschefeuchte abhängige Größe in Verbindung mit dem Maß für die Temperatur des Luftstroms vor und/oder nach dessen Berührung mit der Wäsche zur Schätzung der Beladung und/oder der Trocknungsdauer (t) verwendet wird, **dadurch gekennzeichnet, dass** die Beladung und/oder die Trocknungsdauer mittels eines neuronalen Netzes (1) geschätzt wird, dass als von der Wäschefeuchte abhängige Größe ein Maß für den elektrischen Widerstand der Wäsche ermittelt wird und dass am Ende eines Trocknungsvorgangs die tatsächliche Trocknungsdauer (tₘ) und anhand dieser der Schätzfehler (e) für die vor Ablauf dieses Trocknungsvorgangs geschätzte Trocknungsdauer (tₛ) ermittelt und bei zukünftigen Schätzungen der Trocknungsdauer (t) berücksichtigt wird.

2. Verfahren nach Anspruch 1, **dadurch gekennzeichnet, dass** zur Schätzung der Beladung und/oder der Trocknungsdauer (t) zusätzlich die seit Beginn des Trocknungsvorgangs vergangene Zeit verwendet wird.

3. Verfahren nach Anspruch 1 oder 2, **dadurch gekennzeichnet, dass** ein mit Hilfe von Trainingsdaten trainiertes neuronales Netz (1) verwendet wird.

4. Verfahren nach Anspruch 3, **dadurch gekennzeichnet, dass** ein neuronales Netz (1) vom Typ Multi Adaline verwendet wird.

5. Verfahren nach einem der Ansprüche 1 bis 4, **dadurch gekennzeichnet, dass** die Beladung und/oder die Trocknungsdauer mittels Fuzzylogik geschätzt wird und dazu Regeln verwendet werden, die durch Lernen mittels eines neuronalen Netzwerks aus Trainingsdaten gewonnen wurden.

## Claims

1. Method of estimating the load and/or drying time (t) in a household laundry drier before expiry of the drying process, in which a magnitude dependent on the laundry moisture and a measure for the temperature of an air flow for drying the laundry are ascertained before and/or after contact of the air flow with the laundry, and the magnitude dependent on the laundry moisture in conjunction with the measure for the temperature of the air flow before and/or after contact thereof with the laundry is employed for estimation of the load and/or the drying time (t), **characterised in that** the load and/or the drying time is or are estimated by means of a neuronal system (1), that as the magnitude dependent on the laundry moisture a measure for the electrical resistance of the laundry is ascertained and that at the end of a drying process the actual drying time (tₘ) and on the basis of this the estimation error (e) for the estimated drying time (tₛ) prior to expiry of this drying process are ascertained and taken into consideration in future estimates of the drying time (t).

2. Method according to claim 1, **characterised in that** the time elapsed since the beginning of the drying process is additionally used for estimation of the load and/or the drying time (t).

3. Method according to claim 1 or 2, **characterised in that** a neuronal system (1) trained with the help of training data is used.

4. Method according to claim 3, **characterised in that** a neuronal system (1) of the type Multi Adaline is used.

5. Method according to one of claims 1 to 4, **characterised in that** the load and/or the drying time is or are estimated by means of a fuzzy logic and for that purpose rules are used which are obtained from training data through learning by means of a neuronal system.

## Revendications

1. Procédé d'estimation de la charge et/ou de la durée du séchage (t) d'un sèche-linge domestique avant le déroulement de l'opération de séchage, dans lequel une grandeur dépendant de l'humidité du linge et une mesure de la température d'un écoulement d'air utilisé pour le séchage du linge sont déterminées avant et/ou après la mise en contact de l'écoulement d'air avec le linge, et la grandeur dépendant de l'humidité du linge est utilisée en association avec la mesure de la température de l'écoulement d'air avant et/ou après sa mise en contact avec le linge pour l'estimation de la charge et/ou de la durée du séchage (t), **caractérisé en ce que** la charge et/ou la durée du séchage sont estimées au moyen d'un réseau neuronal (1), **en ce que** comme grandeur dépendant de l'humidité du linge, on détermine une mesure de la résistance électrique du linge, et **en ce qu'**à la fin d'une opération de séchage, la durée de séchage effective (tₘ) et, à partir de celle-ci, l'erreur d'estimation (e) sur la durée de séchage (tₛ) estimée avant le déroulement de l'opération de séchage sont déterminées et prises en compte lors des estimations futures de la durée de séchage (t).

2. Procédé selon la revendication 1, **caractérisé en ce que** pour estimer la charge et/ou la durée du séchage (t), on utilise en plus la durée qui s'est écoulée depuis le début de l'opération de séchage.

3. Procédé selon la revendication 1 ou 2, **caractérisé en ce que** l'on utilise un réseau neuronal (1) entraîné à l'aide de données d'apprentissage.

4. Procédé selon la revendication 3, **caractérisé en ce que** l'on utilise un réseau neuronal (1) du type "Multi Adaline".

5. Procédé selon l'une des revendications 1 à 4, **caractérisé en ce que** la charge et/ou la durée de séchage sont estimées au moyen d'une logique floue et **en ce qu'**à cet effet, on utilise des règles qui ont été obtenues par apprentissage au moyen d'un réseau neuronal utilisant des données d'apprentissage.
